# EUROPÄISCHE PATENTSCHRIFT

(11) **EP 2 499 346 B1**
(45) Veröffentlichungstag und Bekanntmachung des Hinweises auf die Patenterteilung: **27.11.2013**
(21) Anmeldenummer: 10771326.5
(22) Anmeldetag: 07.10.2010
(51) Int. Cl.: F02D 13/02, F01L 13/00, F01L 1/34

(54) **BRENNKRAFTMASCHINE MIT ACHT ZYLINDERN IN V-BAUART**
V8 INTERNAL COMBUSTION ENGINE
MOTEUR À COMBUSTION INTERNE DE TYPE V8

(30) Priorität: 13.11.2009 DE 102009053269
(43) Veröffentlichungstag der Anmeldung: 19.09.2012
(73) Patentinhaber: Bayerische Motoren Werke Aktiengesellschaft, 80809 München (DE)
(72) Erfinder: KIRCHWEGER, Wolfram, 80802 München (DE); KADURA, Ralf, 84036 Landshut (DE)
(86) Internationale Anmeldenummer: PCT/EP2010/006122
(87) Internationale Veröffentlichungsnummer: WO 2011/057697

(56) Entgegenhaltungen:
- DE-A1- 19 954 689
- DE-A1-102005 032 791
- JP-A- 2003 056 374
- US-A1- 2007 074 686
- US-B1- 7 275 511

## Beschreibung

Die Erfindung betrifft eine Brennkraftmaschine mit acht Zylindern in V-Bauart mit den Merkmalen aus dem Oberbegriff des Patentanspruchs 1.

Sie geht von der deutschen Offenlegungsschrift DE 199 54 689 A1 aus. Aus dieser ist eine gattungsgemäße Brennkraftmaschine mit acht Zylindern in V-Bauart bekannt. Ein erster, ein zweiter, ein dritter und ein vierter, in Reihe nebeneinander angeordneter Zylinder bilden eine erste Zylinderbank und ein fünfter, ein sechster, ein siebter und ein achter, ebenfalls in Reihe nebeneinander angeordneter Zylinder bilden eine zweite, der ersten Zylinderbank gegenüberliegende Zylinderbank. Weiter weist die Brennkraftmaschine eine Kurbelwelle mit einer Schränkung von 90°, d. h. eine gekreuzte Kurbelwelle auf und einen Zündabstand von Zylinder zu Zylinder von 90° Kurbelwinkel (90°KW). Für den Ladungswechsel weist jede Zylinderbank eine Einlass- und eine Auslassnockenwelle auf zur Betätigung von Einlass- und Auslassgaswechselventilen für jeden Zylinder. Um u. a. die Laufruhe der Brennkraftmaschine, insbesondere im Leerlauf und bei kleineren Teillasten zu verbessern wird vorgeschlagen, Mittel zur Realisierung von unterschiedlichen Auslassventilhubverläufen von mindestens zwei in einer Zylinderreihe angeordneten Zylindern vorzusehen, die zu einer Reduzierung von Öffnungsüberschneidungsphasen dieser Gaswechselauslassventile führen, wobei sich das Einlass- und das Auslassventil einer der beiden Zylinder selbst in einer Öffnungsüberschneidungsphase befinden.

Auch wenn diese aus dem Stand der Technik bekannte Brennkraftmaschine mit acht Zylindern in V-Bauart keine prinzipiellen Nachteile aufweist, liegt der vorliegenden Erfindung die Aufgabe zugrunde, eine weitere Maßnahme zur Reduzierung der Laufunruhe der Brennkraftmaschine, insbesondere im Leerlauf und unteren Teillastbereich aufzuzeigen.

Diese Aufgabe wird durch die Merkmale im kennzeichnenden Teil des Patentanspruchs 1 gelöst.
Durch die erfindungsgemäße Ausgestaltung wird in vorteilhafter Weise eine Vergleichmäßigung der spezifischen Arbeit der einzelnen Zylinder in jeder Zylinderbank erzielt und damit die Drehungleichförmigkeit in kritischen Betriebsbereichen, insbesondere im Leerlauf und im unteren Teillastbereich reduziert. Durch diese erfindungsgemäße Maßnahme kann die Anwendung applikativer Maßnahmen vermieden werden, was zu einer Verbesserung des Wirkungsgrades (weniger Kraftstoffverbrauch bzw. CO₂-Emission), der Laufruhe und der Schadstoffrohemissionen führt. Darüber hinaus ermöglicht die verbesserte Laufruhe in vorteilhafter Weise die Absenkung der Leerlaufdrehzahl und führt damit zu einer Verringerung des Leerlaufkraftstoffverbrauchs.

Die Ausgestaltungen gemäß der Patentansprüche 2 und 3 sind ein erstes besonders bevorzugtes Ausführungsbeispiel.

Die Ausgestaltungen gemäß der Patentansprüche 4 und 5 sind ein zweites besonders bevorzugtes Ausführungsbeispiel.

Die Ausgestaltung gemäß Patentanspruch 6 ist ein drittes besonders bevorzugtes Ausführungsbeispiel.

Die Hubangaben gemäß Patentanspruch 7 sind ein besonders bevorzugter Größenbereich, in dem die erfindungsgemäße Wirkung auftritt.

Im Folgenden ist die Erfindung anhand von zwei schematischen Darstellungen näher erläutert.

Für gleiche Bauelemente gelten in beiden Figuren die gleichen Bezugsziffern.
- Fig. 1: zeigt schematisch eine Zündfolge für eine gattungsgemäße Brennkraftmaschine mit acht Zylindern in V-Bauart.
- Fig. 2: zeigt schematisch eine erfindungsgemäße Brennkraftmaschine mit acht Zylindern in V-Bauart.

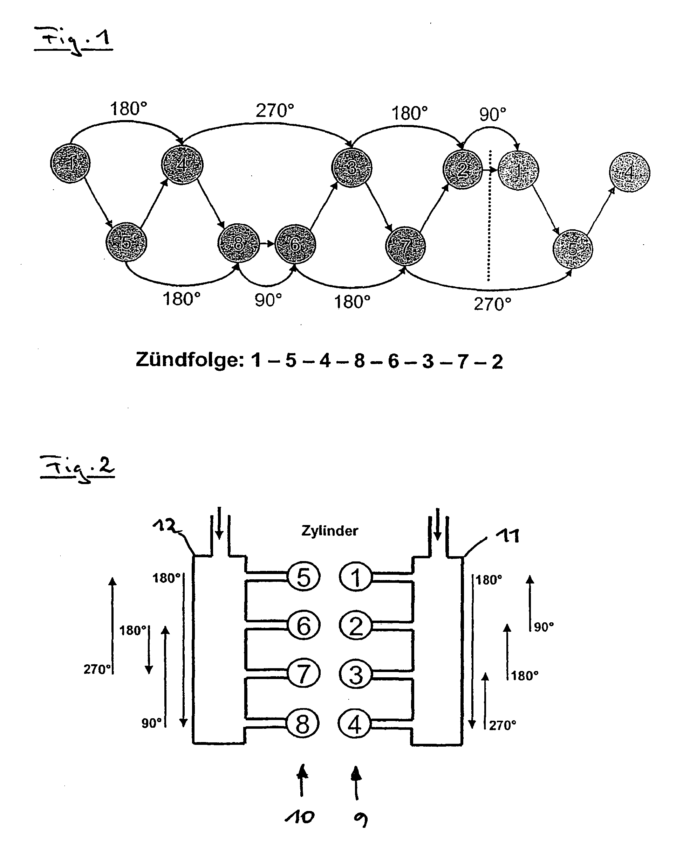

Fig. 1 zeigt schematisch eine Zündfolge für eine gattungsgemäße Brennkraftmaschine mit acht Zylindern in V-Bauart. Die Zylinder sind symbolisch als Kreise dargestellt und entsprechend der Zylinderzahl von 1 bis 8 durchnummeriert. Der erste, der zweite, der dritte und der vierte Zylinder 1, 2, 3, 4 sind in einer ersten Zylinderreihe nebeneinander angeordnet, erkennbar in Fig. 2 und bilden eine erste Zylinderbank 9. Der fünfte, der sechste, der siebte und der achte Zylinder sind in einer zweiten Zylinderreihe nebeneinander angeordnet und bilden eine zweite Zylinderbank 10, die der ersten Zylinderbank 9 gegenüberliegt. Weiter weist die Brennkraftmaschine eine gekreuzte Kurbelwelle auf, woraus ein Zündabstand von Zylinder zu Zylinder von 90° Kurbelwinkel resultiert. Weiter weist jede Zylinderbank eine nicht dargestellte Einlass- und eine ebenfalls nicht dargestellte Auslassnockenwelle auf, zur Betätigung von zumindest einem Einlass- und zumindest einem Auslassgaswechselventils für jeden Zylinder.

Die Zündfolge für die gattungsgemäße Brennkraftmaschine lautet: Zylinder 1 - Zylinder 5 - Zylinder 4 - Zylinder 8 - Zylinder 6 - Zylinder 3 - Zylinder 7 - Zylinder 2 und wieder von vorne. Schematisch ist diese Zündfolge durch innen liegende, gerade Pfeile von Zylinder zu Zylinder dargestellt. Weiter ist der Zündabstand in Grad Kurbelwinkel (°KW) von Zylindern einer Zylinderbank 9, 10 jeweils durch außen liegende, gebogene Pfeile dargestellt. Durch die unregelmäßige Zündfolge bezüglich einer Zylinderbank 9, 10 betragen die Zündabstände von Zylinder zu Zylinder 90° oder 180° oder 270° Kurbelwinkel. Ein Neubeginn der Zündfolge ist durch einen vertikalen gepunkteten Strich dargestellt.

Aufgrund der dargestellten, ungleichmäßigen Zündfolge bei V8-Brennkraftmaschinen mit gekreuzter Kurbelwelle ergibt sich somit eine gegenseitige Beeinflussung der Zylinder 1, 2, 3, 4, 5, 6, 7, 8 durch eine Gasdynamik sowohl in einem Luftsammler als auch in einem Abgaskrümmer. Die größte gegenseitige Beeinflussung findet dabei innerhalb einer Zylinderbank 9, 10 zwischen den Zylindern 1, 2, 6, 8 mit jeweils 90° Zündabstand statt und bewirkt aufgrund der Gasdynamik eine unterschiedliche Frischgasfüllung, Ladungswechselarbeit und Restgasgehalte und somit eine unterschiedliche zylinderspezifische Arbeit. Dies führt insbesondere im Leerlauf und im Teillastbereich zu Drehungleichförmigkeiten, die bisher über applikative Maßnahmen soweit wie möglich verringert werden.

Üblich sind folgende Maßnahmen:
1. Zylinderselektive Zündwinkel: Dabei werden über Spätverstellung der Zündwinkel alle Zylinder 1, 2, 3, 4, 5, 6, 7, 8 einer Bank 9, 10 auf das Niveau des schlechtesten Zylinders gebracht. Der Gesamtwirkungsgrad wird dabei in nachteiliger Weise verschlechtert.
2. Zylinderselektive Gemischvorsteuerung: Über eine gezielte Anfettung bzw. Abmagerung (λ) der Zylinder werden diese auf ein gleichmäßiges Niveau gestellt. Nachteilig werden der Gesamtwirkungsgrad der Brennkraftmaschine und die Laufruhe der abgemagerten Zylinder verschlechtert und die Schadstoffrohemissionen werden erhöht.
3. Androsselung: Um die Drehungleichförmigkeit zu verringern kann bei einem variablen Einlassventilhub der Hub vergrößert und die Last über eine Drosselklappe wieder reduziert werden. Das führt in nachteiliger Weise zu einer Verschlechterung des Wirkungsgrades der Brennkraftmaschine und damit des Kraftstoffverbrauchs.

Um die o. g. Nachteile zu vermeiden wird erfindungsgemäß vorgeschlagen, dass die Gaswechseleinlassventile derjenigen Zylinder (1, 2, 3, 4, 5, 6, 7, 8) einer jeden Zylinderbank (9, 10) einen größeren Ventilhub aufweisen, die nach 90° Kurbelwinkel in der selben Zylinderbank (9, 10) betätigt werden, als die unmittelbar zuvor betätigten Gaswechseleinlassventile in der selben Zylinderbank (9, 10), wobei die unmittelbar zuvor betätigten Gaswechseleinlassventile in der selben Zylinderbank (9, 10) einen geringeren Ventilhub aufweisen als alle restlichen Gaswechseleinlassventile beider Zylinderbänke (9,10). Dies bedeutet, dass durch eine gezielte Anpassung der Einzeleinlassventilhübe die unterschiedliche Arbeit der einzelnen Zylinder 1, 2, 3, 4, 5, 6, 7, 8 korrigiert wird. Damit wird in kritischen Betriebspunkten die oben beschriebene, systembedingte Drehungleichförmigkeit aus dem V8 typischen Ladungswechsel im Idealfall vollständig beseitigt. Das heißt, dass die Gaswechseleinlassventile der Zylinder 1, 2, 3, 4, 5, 6, 7, 8 mit geringerer spezifischer Arbeit weiter geöffnet werden, die Gaswechseleinlassventile der Zylinder 1, 2, 3, 4, 5, 6, 7, 8 mit höherer spezifischer Arbeit weniger weit. Für die technische Umsetzung werden 3 unterschiedliche Konzepte vorgeschlagen:
1. Dass die Betätigung der Gaswechseleinlassventile über je ein Zwischenelement und der größere Ventilhub durch eine Hubkorrektur des Zwischenelementes erfolgt, wobei das Zwischenelement bevorzugt ein Schlepp- oder Kipphebel sein kann.
2. Dass das Zwischenelement zylinderkopfseitig auf einem Spielausgleichselement abgestützt ist und der größere Ventilhub durch eine Höhen- und/oder Winkellagekorrektur des Spielausgleichselementes erfolgt, wobei das Spielausgleichselement besonders bevorzugt ein hydraulisches Spielausgleichselement ist.
3. Dass die Betätigung der Gaswechseleinlassventile über einen hubvariablen Ventiltrieb mit einem Hubstellelement erfolgt und der größere Ventilhub durch eine Hubkorrektur des Hubeinstellelementes erfolgt. Ein solcher hubvariabler Ventiltrieb ist beispielsweise aus dem deutschen Patent DE 101 23 186 A1 bekannt und findet sich in allen BMW Motoren mit der sog. Valvetronic. Hier kann beispielsweise durch unterschiedliche Steuerkurven für jede Stellung einer gattungsgemäßen Exzenterwelle der Hub der Gaswechselventile der einzelnen Zylinder 1, 2, 3, 4, 5, 6, 7, 8 korrigiert werden. Eine Optimierung kann hier für mehrere Betriebspunkte erfolgen.

Fig. 2 zeigt schematisch eine gattungsgemäße Brennkraftmaschine mit 8 Zylindern in V-Bauart. Die einzelnen Zylinder 1, 2, 3, 4, 5, 6, 7, 8 sind wiederum symbolisch als Kreise dargestellt. Die Zylinder 1, 2, 3, 4 liegen in einer Reihe nebeneinander und bilden die erste Zylinderbank 9. Die Zylinder 5, 6, 7 und 8 liegen ebenfalls in Reihe nebeneinander und bilden die zweite Zylinderbank 10, wobei die zweite Zylinderbank 10 der ersten Zylinderbank 9 gegenüberliegt. An die erste Zylinderbank 9 ist ein erster Luftsammler 11 angeordnet, an die zweite Zylinderbank 10 ist ein zweiter Luftsammler 12 angeordnet. Eine Einströmrichtung der Luft ist durch Pfeile schematisch dargestellt. Neben den Luftsammlern 11, 12 ist nochmals schematisch der Zündabstand der einzelnen Zylinder einer jeweiligen Bank 9, 10 mit Pfeilen aufgetragen.

Durch die erfindungsgemäße Ausgestaltung sind eine Vergleichmäßigung der spezifischen Arbeit der einzelnen Zylinder 1, 2, 3, 4, 5, 6, 7, 8 und damit eine Reduzierung der Drehungleichförmigkeit in kritischen Betriebsbereichen, insbesondere im Leerlauf und im Teillastbereich erzielt.

Dies führt in vorteilhafter Weise zur:
➢ Vermeidung der Anwendung applikativer Maßnahmen und damit zu einer Verbesserung des Wirkungsgrades der Brennkraftmaschine (Kraftstoffverbrauch bzw. CO₂), der Laufruhe und der Schadstoffrohemissionen.
➢ Absenkung der Leerlaufdrehzahl aufgrund der verbesserten Laufruhe, was zu einer Verringerung des Leerlaufkraftstoffverbrauchs führt.

### Bezugszeichenliste:

1. Erster Zylinder
2. Zweiter Zylinder
3. Dritter Zylinder
4. Vierter Zylinder
5. Fünfter Zylinder
6. Sechster Zylinder
7. Siebenter Zylinder
8. Achter Zylinder
9. Erste Zylinderbank
10. Zweite Zylinderbank
11. Erster Luftsammler
12. Zweiter Luftsammler

## Patentansprüche

1. Brennkraftmaschine mit acht Zylindern in V-Bauart, wobei von einem ersten, einem zweiten, einem dritten und einem vierten, in Reihe nebeneinander angeordneten Zylinder (1, 2, 3, 4) eine erste Zylinderbank (9) und von einem fünften, einem sechsten, einem siebten und einem achten, in Reihe nebeneinander angeordneten Zylinder (5, 6, 7, 8) eine zweite, der ersten Zylinderbank (9) gegenüberliegende Zylinderbank (10) gebildet ist, wobei die Brennkraftmaschine eine gekreuzte Kurbelwelle aufweist und von Zylinder von Zylinder einen Zündabstand von 90° Kurbelwinkel aufweist und wobei jeder Zylinderbank eine Einlass- und eine Auslassnockenwelle zugeordnet ist, zur Betätigung zumindest eines Einlass- und eines Auslassgaswechselventils für jeden Zylinder (1, 2, 3, 4, 5, 6, 7, 8), **dadurch gekennzeichnet, dass** die Gaswechseleinlassventile derjenigen Zylinder (1, 2, 3, 4, 5, 6, 7, 8) einer jeden Zylinderbank (9, 10) einen größeren Ventilhub aufweisen, die nach 90° Kurbelwinkel in der selben Zylinderbank (9, 10) betätigt werden, als die 90° Kurbelwinkel zuvor betätigten Gaswechseleinlassventile in der selben Zylinderbank (9, 10), wobei die 90° Kurbelwinkel zuvor betätigten Gaswechseleinlassventile in der selben Zylinderbank (9, 10) einen geringeren Ventilhub aufweisen als alle restlichen Gaswechseleinlassventile beider Zylinderbänke (9,10).

2. Brennkraftmaschine nach Patentanspruch 1,
**dadurch gekennzeichnet, dass** die Betätigung der Gaswechseleinlassventile über je ein Zwischenelement und der größere Ventilhub durch eine Hubkorrektur des Zwischenelementes erfolgt.

3. Brennkraftmaschine nach Patentanspruch 2,
**dadurch gekennzeichnet, dass** das Zwischenelement ein Schlepp- oder Kipphebel ist.

4. Brennkraftmaschine nach einem der Patentansprüche 1 bis 3,
**dadurch gekennzeichnet, dass** das Zwischenelement zylinderkopfseitig auf einem Spielausgleichselement abgestützt ist und der größere Ventilhub durch eine Höhen- und/oder Winkellagekorrektur des Spielausgleichselementes erfolgt.

5. Brennkraftmaschine nach Patentanspruch 4,
**dadurch gekennzeichnet, dass** das Spielausgleichselement ein hydraulisches Spielausgleichselement ist.

6. Brennkraftmaschine nach Patentanspruch 1,
**dadurch gekennzeichnet, dass** die Betätigung der Gaswechseleinlassventile über einen Hubvariablen Ventiltrieb mit einem Hubstellelement erfolgt und der größere Ventilhub durch eine Hubkorrektur des Hubstellelementes erfolgt.

7. Brennkraftmaschine nach einem der Patentansprüche 1 bis 6,
**dadurch gekennzeichnet, dass** größere und/oder kleinere Hubhöhe zwischen 0,005 mm und 1,0 mm gegenüber den restlichen Gaswechseleinlassventilen beträgt.

## Claims

1. An internal combustion engine with eight cylinders in a V arrangement, wherein a first, a second, a third and a fourth cylinder disposed side by side in a line (1, 2, 3, 4) form a first row (9) and a fifth, sixth, seventh, and eighth cylinder (5, 6, 7, 8) disposed next to one another in line form a second row, the first row (9) being opposite the second row (10), wherein the engine has a crossed crankshaft and an ignition interval of 90 crank angle from cylinder to cylinder and wherein each row is associated with an inlet and an outlet camshaft in order to actuate at least one inlet and one outlet gas change valve for each cylinder (1, 2, 3, 4, 5, 6, 7, 8),
**characterised in that** in each row (9, 10) the gas change inlet valves of the cylinders (1, 2, 3, 4, 5, 6, 7, 8) actuated after a 90 crank angle have a greater valve stroke than the gas change inlet valves actuated before the 90 crank angle in the same row (9, 10), wherein the gas change inlet valves actuated before the 90 crank angle in the same row (9, 10) have a smaller valve stroke than all the remaining gas change inlet valves in both rows (9, 10).

2. An engine according to claim 1,
**characterised in that** the gas change inlet valves are actuated each by a respective intermediate element and the greater valve stroke is achieved by correcting the stroke of the intermediate element.

3. An engine according to claim 2,
**characterised in that** the intermediate element is a drag lever or a rocker arm.

4. An engine according to any of claims 1 to 3,
**characterised in that** the intermediate element abuts a clearance compensating element on the cylinder-head side and the greater valve stroke is obtained by correcting the height and/or angle of the clearance compensating element.

5. An engine according to claim 4,
**characterised in that** the clearance compensating element is a hydraulic clearance compensating element.

6. An engine according to claim 1,
**characterised in that** the gas change inlet valves are actuated via a variable-stroke valve drive comprising a stroke adjusting element, and the greater valve stroke is obtained by correcting the stroke of the stroke adjusting element.

7. An engine according to any of claims 1 to 6,
**characterised in that** the greater and/or smaller stroke is between 0.005 mm and 1.0 mm relative to the remaining gas change inlet valves.

## Revendications

1. Moteur à combustion interne de type V8 ayant un premier, un second, un troisième, un quatrième cylindre (1, 2, 3, 4) en série dans un premier banc de cylindres (9) et un cinquième, sixième, septième, huitième cylindre (5, 6, 7, 8) dans un second banc de cylindres (10) en regard du premier banc de cylindres (9),
le moteur à combustion interne ayant un vilebrequin croisé et un angle d'allumage de 90° d'angle de vilebrequin d'un cylindre à l'autre, et chaque banc de cylindres ayant un arbre à cames d'admission et un arbre à cames d'échappement pour actionner au moins les soupapes d'admission et les soupapes d'échappement de chaque cylindre (1, 2, 3, 4, 5, 6, 7, 8),
**caractérisé en ce que**
les soupapes d'admission des cylindres (1, 2, 3, 4, 5, 6, 7, 8) de chaque banc de cylindres (9, 10) qui sont actionnées dans le même banc de cylindres (9, 10) après un angle de vilebrequin de 90°, ont une levée de soupape de course plus grande que celle des soupapes d'échange de gaz du même banc de cylindres (9, 10) actionnées avant sur un angle de vilebrequin de 90°,
les soupapes d'échange de gaz actionnées avant l'angle de vilebrequin de 90° dans le même banc de cylindres (9, 10) ont une levée de soupape plus faible que les autres soupapes d'admission d'échange de gaz des deux bancs de cylindres (9, 10).

2. Moteur selon la revendication 1,
**caractérisé en ce que**
l'actionnement des soupapes d'admission se fait par un élément intermédiaire respectif et la plus grande course de soupape se fait par une correction de course de l'élément intermédiaire.

3. Moteur selon la revendication 2,
**caractérisé en ce que**
l'élément intermédiaire est un culbuteur ou un levier linguet.

4. Moteur selon l'une des revendications 1 à 3,
**caractérisé en ce que**
l'élément intermédiaire, côté tête de cylindre, s'appuie sur un élément de compensation de jeu et la plus grande levée de soupape se fait par une correction d'amplitude et/ou d'angle de l'élément de compensation de jeu.

5. Moteur selon la revendication 4,
**caractérisé en ce que**
l'élément de compensation de jeu est un élément hydraulique de compensation de jeu.

6. Moteur selon la revendication 1,
**caractérisé en ce que**
l'actionnement des soupapes d'échange de gaz se fait par une course variable de l'entrainement de soupape à l'aide d'un élément d'actionnement de levée et la levée de soupape la plus grande s'obtient par une correction de levée de l'élément d'actionnement de course.

7. Moteur selon l'une des revendications 1 à 6,
**caractérisé en ce que**
la plus grande et/ou la plus petite amplitude de levée est comprise entre 0,005 mm et 1,0 mm par rapport aux autres soupapes d'admission.
